**Europäisches Patentamt**

**European Patent Office**

**Office européen des brevets**

(19)

(11) Veröffentlichungsnummer : **0 400 041 B1**

(12)

# EUROPÄISCHE PATENTSCHRIFT

(45) Veröffentlichungstag der Patentschrift :
27.01.93 Patentblatt 93/04

(51) Int. Cl.$^5$ : **H02J 7/10**, H02M 3/335

(21) Anmeldenummer : **89902227.1**

(22) Anmeldetag : **09.02.89**

(86) Internationale Anmeldenummer :
**PCT/DE89/00079**

(87) Internationale Veröffentlichungsnummer :
**WO 89/07854 24.08.89 Gazette 89/20**

---

(54) **VERFAHREN UND SCHALTUNGSANORDNUNG ZUR BESTIMMUNG DER LADEZEIT EINES AKKUMULATORS.**

(30) Priorität : **09.02.88 DE 3803906**

(43) Veröffentlichungstag der Anmeldung :
**05.12.90 Patentblatt 90/49**

(45) Bekanntmachung des Hinweises auf die
Patenterteilung :
**27.01.93 Patentblatt 93/04**

(84) Benannte Vertragsstaaten :
**AT BE CH DE FR GB IT LI LU NL SE**

(56) Entgegenhaltungen :
**EP-A- 0 030 276**
**EP-A- 0 056 593**
**EP-A- 0 095 072**
**EP-A- 0 226 128**

(73) Patentinhaber : **Braun Aktiengesellschaft**
**Rüsselsheimer Strasse 22**
**W-6000 Frankfurt/Main (DE)**

(72) Erfinder : **GERHARD, Lang**
**Merzhäuser Stra e 26**
**W-6395 Altweilnau (DE)**

(74) Vertreter : **Einsele, Rolf**
**Braun Aktiengesellschaft Postfach 1120**
**Frankfurter Strasse 145**
**W-6242 Kronberg Taunus (DE)**

EP 0 400 041 B1

**Beschreibung**

Die Erfindung betrifft ein Verfahren und eine Schaltungsanordnung zur Bestimmung der Ladezeit eines Akkumulators und zur Anzeige des aktuellen Ladezustandes.

Akkumulatoren von insbesondere kleinen Haushaltsgeräten, wie Rasierern, können aus elektronischen Schaltnetzteilen, die an Spannungsquellen von 12 Volt bis 240 Volt ohne Umschaltung angeschlossen werden, geladen werden. Ein solches Schaltnetzteil ist beispielsweise in der EP-OS 0 095 072 beschrieben.

Da mit solchen Schaltnetzteilen ausgestattete Geräte oft direkt hintereinander an Spannungsquellen stark unterschiedlicher Spannung betrieben werden, ist es für den Verbraucher schwierig festzustellen, in welchem Ladezustand sich der Akkumulator seines Gerätes befindet.

Aufgabe der Erfindung ist es deshalb, eine Ladezustandsanzeige eines solchen Gerätes so zu steuern, daß sie ein möglichst genaues Abbild der tatsächlichen Ladung des Akkumulators vermittelt, ohne daß die in Abhängigkeit von der Größe der Eingangsspannung zugeflossene Ladung in den Akkumulator oder die aus dem Akkumulator abgeflossene Ladung ermittelt werden muß.

Das im Anspruch 1 angegebene Verfahren und die im Anspruch 7 angegebene Schaltungsanordnung gestatten es, auf einfache Art und Weise die zur Bestimmung des Ladezustandes benötigten Signale direkt aus dem Sekundärkreis des elektronischen Schaltnetzteils zu gewinnen und über einen Logikpegelgenerator einem Microcontroller zur Verarbeitung zuzuführen, der die Ladezustandsanzeige entsprechend steuert und/oder den Ladevorgang beendet.

Vorteilhafte Ausgestaltungen des Verfahrens und der Schaltungsanordnung zur Durchführung des Verfahrens sind den Unteransprüchen und der nachfolgenden Beschreibung zu entnehmen.

Anhand eines in der Zeichnung dargestellten Ausführungsbeispiels soll der der Erfindung zugrundeliegende Gedanke näher erläutert werden. Es zeigen:

Fig. 1 ein Schaltbild eines elektronischen Schaltnetzteiles mit einer Steuer- und Regelelektronik zur Schnelladung eines Akkumulators mit automatischem Übergang auf eine Erhaltungsladung,

Fig. 2 eine Schaltungsanordnung gemäß Fig. 1, mit einer Blinkanzeige bei Übergang vom Schnelladezustand in den Erhaltungsladezustand und

Fig. 3 eine Schaltungsanordnung gemäß Fig. 1, mit einer Wicklungsanzapfung der Sekundärwicklung,

Fig. 4 ein Blockschaltbild und

Fig. 5 ein Ausführungsbeispiel eines in Fig. 4 gezeigten Pegelgenerators.

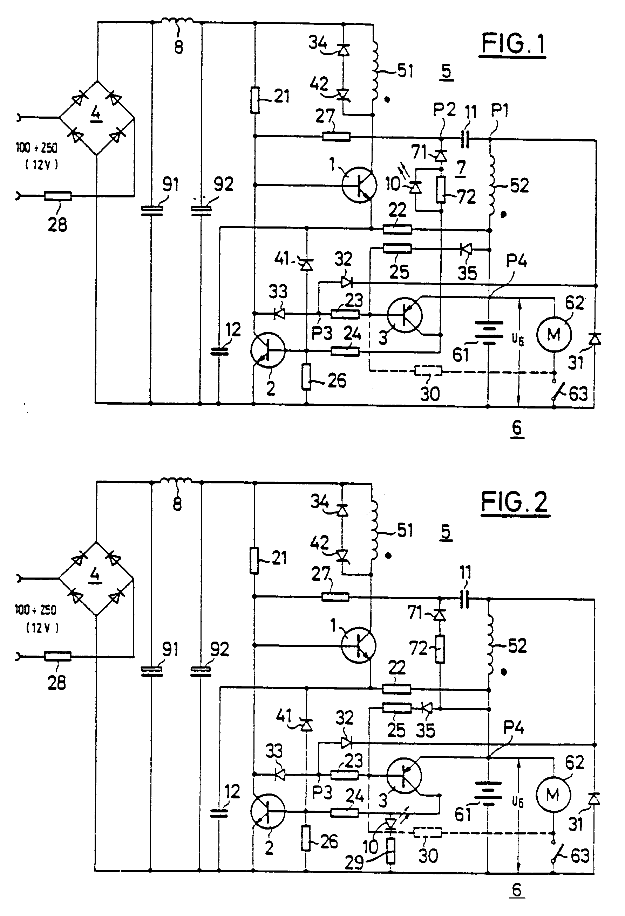

In Fig. 1 ist ein elektronisches Schaltnetzteil dargestellt, das aus einem primär getakteten Sperrwandler mit einem Übertrager 5 und einem ersten Transistor 1 sowie einer im Lastkreis vorgesehenen ersten Diode 31 besteht. Der Sperrwandler wird über eine Gleichrichter-Brückenschaltung 4 und einen Widerstand 28 aus einem Gleich- oder Wechselspannungsnetz gespeist, dessen Spannung zwischen 100 und 250 Volt, im Extremfall aber auch 12 Volt, und dessen Frequenz im Falle eines speisenden Wechselspannungsnetzes nahezu beliebig sein kann. Die gleichgerichtete Ausgangsspannung wird einer Sieb- und Glättungsanordnung, bestehend aus einer Längsdrossel 8 und zwei Glättungskondensatoren 91, 92 an den Eingang des Sperwandlers bzw. der Steuer- und Regelelektronik gelegt.

Parallel zu den Gleichspannungsklemmen ist die Reihenschaltung der Primärwicklung 51 des Übertrager 5 mit der Kollektor-Emitter-Strecke des ersten Transistors 1 und eines zweiten Kondensators 12 geschaltet. An die Basis des ersten Transistors 1 ist ein erster Widerstand 21 angeschlossen, der über die Längsdrossel 8 mit dem positiven Pol der Eingangsspannungsklemme verbunden ist. Darüber hinaus ist die Basis des ersten Transistors 1 über die Kollektor-Emitter-Strecke eines zweiten Transistors 2 mit Masse- oder Bezugspotential verbunden. Der Emitter des ersten Transistors 1 ist an die Kathode einer ersten Zenerdiode 41 angeschlossen, deren Anode sowohl mit der Basis des zweiten Transistors 2 als auch über einen Widerstand 26 mit Masse- oder Bezugspotential verbunden ist. Darüber hinaus ist der Emitter des ersten Transistors 1 über einen zweiten Widerstand 22 an ein Wicklungsende der Sekundärwicklung 52 des Übertragers 5 angeschlossen. Der Wickelsinn der Primär- und Sekundärwicklung des Übertragers 5 ist durch die eingetragenen Punkte angedeutet.

Ein erster Kondensator 11 ist über einen Widerstand 27 mit der Basis des ersten Transistors I und unmittelbar mit dem einen Wicklungsende der Sekundärwicklung 52 des Übertragers 5 verbunden. An das andere Wicklungsende der Sekundärwicklung 52 ist sowohl der Verbraucher 6, bestehend aus der Parallelschaltung eines Akkumulators 61 mit der Reihenschaltung eines Schalters 63 und eines Gleichstrommotors 62, als auch die Anode der Diode 35 angeschlossen, zu der in Reihe ein mit der Basis eines dritten Transistors 3 verbundener Widerstand 25 geschaltet ist.

An die Verbindung des dritten Widerstandes 23 mit der dritten Diode 33 ist anodenseitig eine zweite Diode 32 angeschlossen, deren Kathode an das eine Wicklungsende der Sekundärwicklung 52 ebenso angeschlossen ist wie die Kathode der ersten Diode 31, die anodenseitig mit dem Verbraucher 6 verbunden ist.

Der erste Kondensator 11 ist zusätzlich mit einer Entladeschaltung 7 verbunden, die aus der Reihenschaltung eines Entladewiderstandes 72 und einer Entladediode 71 besteht, die kathodenseitig mit dem ersten Kondensator 11 verbunden ist. Der Entladewiderstand 72 ist an dem Kollektor des dritten Transistors 3 angeschlossen, dessen Emitter mit dem anderen Wicklungsende der Sekundärwicklung 52 bzw. mit dem Verbraucher 6 verbunden ist.

Zur Begrenzung der Rückschlagsspannung ist parallel zur Primärwicklung 51 des Übertragers 5 eine Schaltung vorgesehen, die aus der Reihenschaltung einer Zenerdiode 42 mit einer vierten Diode 34 besteht, die anodenseitig miteinander verbunden sind.

Wahlweise kann die Basis des dritten Transistors 3 über einen weiteren Widerstand 30 an die Verbindung des Gleichstrommotors 62 mit dem Schalter 63 angeschlossen werden. Diese Verbindungsmöglichkeit ist in Fig. 1 gestrichelt eingetragen.

Nachstehend soll die Funktionsweise der Schaltungsanordnung gemäß Fig. 1 näher erlautert werden.

Nach der Gleichrichtung mittels der Gleichrichter-Brückenschaltung 6 und Siebung mittels der Längsdrossel 8 bzw. der Querkondensatoren 91, 92 wird der als Schalttransistor arbeitende erste Transistor 1 über den ersten Widerstand 21 mit einem geringen Basisstrom angesteuert. Infolge des eingeschalteten ersten Transistors 1 entsteht üiber die Schaltstrecke des ersten Transistors 1 und die Primärwicklung 51 des Übertragers 5 ein Mitkopplungseffekt, durch den der erste Transistor 1 zusätzlich angesteuert und in den leitenden Zustand geschaltet wird. Der Kollektorstrom steigt linear an und erzeugt am zweiten Widerstand 22 eine proportionale Spannung. Beim Erreichen eines bestimmten Spitzenstromwertes wird über die erste Zenerdiode 41 der zweite Transistor 2 angesteuert, gelangt dadurch in den leitenden Zustand und verbindet die Basis des ersten Transistors 1 mit Bezugspotential bzw. Masse und entzieht damit dem ersten Transistor 1 den Basisstrom, woraufhin der erste Transistor 1 sperrt. Mit Beginn der Sperrphase wechselt die Polarität der in der Sekundärwicklung 52 des Übertragers 5 induzierten Spannung am Anschlußpunkt P1 des ersten Kondensators 11. Die im Übertrager 5 gespeicherte Energie wird damit nach dem Prinzip des Sperrwandlers über die erste Diode 31 an den Verbraucher 6 abgegeben.

Während des Umschwingvorganges des Übertragers 5 begrenzen die Diode 34 sowie die Zenerdiode 42 parallel zur Prümärwicklung 51 des Übertragers 5 die Rückschlagsspannungsspitze während der Sperrphase.

Die während der gesamten Übertrager-Entladephase entstehende negative Spannung am Punkt P1 gelangt über die zweite Diode 32 an den Verdungspunkt P3, das heißt an die Verbidung zwischen der dritten Diode 33 und dem dritten Widerstand 23 im Basisstromkreis des dritten Transistors 3. Infolge dieser negativen Spannung schaltet der als PNP-Transistor ausgeführte dritte Transistor 3 in den leitenden Zustand.

Im Leitzustand des ersten Transistors 1 wurde der erste Kondensator 11 über den Widerstand 27 auf die Spannung

$$U_{C11} = U_{sek.} (1 - e^{-t/\tau})$$

aufgeladen, wobei sich am Punkt P2 des ersten Kondensators 11 eine negative Polarität ausbildete.

Diese Ladung mit negativer Polarität am Punkt P2 fließt bei geöffnetem dritten Transistor 3 über die Entladeschaltung 7, das heißt über die Entladediode 71, den Entladewiderstand 72 sowie die parallel zum Entladewiderstand 72 geschaltete Leuchtdiode 10 über die durchgeschaltete Kollektor-Emitter-Strecke des dritten Transistors 3 zum Punkt P4, das heißt an den Pluspol des Akkumulators 61 ab.

Mit der Entladung des ersten Transistors 11 und anschließender Umladung wird somit die Leuchtdiode 10 als Betriebsanzeige angesteuert. Dabei gewährleistet der parallel geschaltete Entladewiderstand 72 auch die Umladung unterhalb der Flußspannung der Leuchtdiode 10.

Die Spannung am umgeladenen ersten Kondensator 11 beträgt:

$$U_{C11} = U_6 (= U_{Batt}) - U_{F31} - U_{CEsatT3} + U_{F71}$$

Dabei bedeutet $U_{C11}$ die Spannung am umgeladenen ersten Kondensator 11, $U_6$ die Spannung am Verbraucher 6, $U_{F71}$ den Spannungsabfall an der Entladediode 71, $U_{CEsatT3}$ die Kollektor-Emitter-Sättigungsspannung des dritten Transistors 3 und $U_{F31}$ den Spannungsabfall an der ersten Diode 31.

Die Kollektor-Emitter-Sättigungsspannung des dritten Transistors 3 ist am Ende des Umladevorganges des ersten Kondensators vernachlässigbar. Die Durchlaß-Spannungsabfälle an der Entladediode 71 und der ersten Diode 31 sind nahezu gleich, da es sich um etwa baugleiche Dioden handelt, und können daher gegeneinander gekürzt werden, so daß die Spannung am umgeladenen ersten Kondensator 11 der Verbraucherspannung $U_6$ mit positivem Vorzeichen am Punkt P2 entspricht.

Diese umgepolte Spannung am umgeladenen ersten Kondensator 11 und am Verbraucher 9 ist deshalb von Bedeutung, weil die positive Spannung am Punkt P2 auch bei sehr niedriger Betriebsspannung von zum Beispiel 12 Volt ein sofortiges Wiedereinschalten des ersten Transistors 1 gewährleistet, wenn nach Beendigung der Übertrager-Entladephase der aus dem zweiten und dritten Transistor gebildete Spannungskomparator infolge der noch nicht erreichten Ausgangsspannung am Punkt P4 in den Sperrzustand kippt.

Wenn die Ausgangsspannung $U_6$ ihren Sollwert erreicht hat oder diesen Sollwert überschreitet, dann bleiben der zweite und dritte Transistor 2, 3 im leitenden Zustand und der erste Kondensator 11 ist am Punkt P1 über die Sekundärwicklung 52 des Übertragers 5 galvanisch mit dem Pluspol des Verbrauchers 6 und am Punkt P2 über den Widerstand 27 und den durchgeschalteten zweiten Transistor 2 mit Masse- bzw. Bezugspotential verbunden. Damit wird der Anschlußpunkt P2 des ersten Kondensators 11 gegenüber dem Anschlußpunkt P1 erneut negativ. Die Größe dieser negativen Spannung wird von der Entladediode 71, der Leuchtdiode 10 bzw. dem Entladewiderstand 72 und dem Widerstand 27 bestimmt. Der durchgeschaltete Spannungskomparator, das heißt der durchgeschaltete zweite und dritte Transistor 2, 3 V, verhindert solange die Wiedereinschaltung des ersten Transistors 1, bis die Verbraucherspannung $U_6$ den vorgegebenen Sollwert unterschreitet und damit der Komparator, das heißt der zweite und dritte Transistor 2, 3 V, in den Sperrzustand kippt. Im gesperrten Zustand des zweiten und dritten Transistors 2, 3 erfolgt wiederum eine Aufladung des ersten Kondensators 11 über den ersten Widerstand 21 sowie den Widerstand 27 auf den summierten Spannungswert der Verbraucherspannung $U_6$ und der Basis-Emitter-Spannung des ersten Transistors 1. Die dritte Diode 33 entkoppelt dabei für diesen Vorgang den aus dem dritten und fünften Widerstand 23 bzw. 25 gebildeten Spannungsteiler vom ersten Widerstand 21. Die Diode 35, die vorzugsweise als Germaniumdiode ausgeführt ist, dient dazu, den Spannungsverlauf des Akkumulators in Abhängigkeit von der Temperatur durch die Elektronik-Schaltung nachzubilden.

Schaltet man den gestrichelt eingetragenen Widerstand 30 einerseits an die Verbindung des dritten Widerstandes 23 mit der Basis des dritten Transistors 3 und andererseits an die Verbindung des Motorschalters 63 mit dem Gleichstrommotor 62, so kann ohne einen zusätzlichen Schalter der aus dem dritten Widerstand 23 und fünften Widerstand 25 gebildete Spannungsteiler beim Einschalten des Gleichstrommotors 62 auf einen niedrigeren Ausgangsspannungspegel, z.B. von 2,9 Volt auf 2,6 Volt, gebracht werden. Damit wird erreicht, daß sich erst dann wieder ein größerer Ausgangsstrom einstellt, wenn durch die Belastung oder den Verbrauch die niedrigere, mittlere Akkumulatorspannung unterschritten wird. Der Gleichstrommotor 62 läuft dann bei Netzbetrieb nicht ständig mit der hohen Ladeschlußspannung des Akkumulators 61. Nach dem Abschalten des Gleichstrommotors 62 erfolgt sofort eine schnelle Nachladung des Akkumulators 61.

Wie aus dieser Beschreibung der Funktionsweise diese Schaltungsanordnung deutlich wird, ist mit geringem Bauteilaufwand möglich, den hohen Schnelladestrom des Akkumulators 61 bei Annäherung bzw. Erreichen des durch die Beschaltung des aus dem zweiten und dritten Transistor 2, 3 gebildeten Spannungskomparators auf einen geringen Erhaltungsladestrom für den Akkumulator 61 zu reduzieren. Dabei erfolgt die Messung der Akkumulatorspannung nicht während des hohen in den Akkumulator 61 hineinfließenden Ladestromes, sondern lediglich bei geringer Belastung. Dadurch werden die durch unterschiedliche Innenwiderstände der einzelnen Zellen des Akkumulators 61 verursachten Fehler vermieden. Dadurch, daß die Spannung des umgeladenen ersten Kondensators in etwa gleich der Verbraucherspannung ist, kann eine Normalladung mit einem Dauerlade-Nennstrom von ca. 40 bis 50 Milliampère auch bei niedriger Betriebsspannung von z.B. 12 Volt durchgeführt werden. Schließlich ist gewährleistet, daß die Steuer- und Regelelektronik zur Schnell- bzw. Dauerladung bei gezogenem Netzstecker keinen Strom aus dem Akkumulator 61 verbraucht, da über die Spannungskomparatorschaltung bzw. über den Sperwandler kein Stromfluß möglich ist.

Die in Fig. 2 dargestellte Variante einer Lösung entspricht weitestgehend der in Fig. 1 dargestellten Steuer- und Regelelektronik für ein elektronisches Schaltnetzteil. Gleiche Bauelemente sind in dieser Schaltungsanordnung ebenfalls mit gleichen Bezugsziffern versehen und insoweit wird auf die Beschreibung des ersten Ausführungsbeispieles Bezug genommen. Unterschiede dieser Schaltungsanordnung gegenüber der Schaltungsanordnung nach Fig. 1 bestehen darin, daß zum einen die Leuchtdiode 10 nicht parallel zum Entladewiderstand 72 sondern in den Kollektorkreis des dritten Transistors 3 eingefügt, anodenseitig mit dem Kollektor des dritten Transistors 3 verbunden und kathodenseitig über einen Vorwiderstand 29 an Masse- bzw. Bezugspotential angeschlossen ist, und zum anderen die Entladeschaltung 7 nicht mehr mit dem Kollektor des dritten Transistors 3, sondern unmittelbar an die Verbindung der Sekundärwicklung 52 des Übertragers 5 mit dem Verbraucher 6 angeschlossen ist.

In dieser Schaltungsvariante beginnt die Leuchtdiode 10 bei der Beendigung des Schnelladevorganges bzw. dem Übergang auf den Erhaltungsladevorgang zu blinken, weil bei erreichter Ausgangsspannung die Leuchtdiode 10 an den Akkumulator 61 angeschaltet ist. Durch die relativ hohe Stromentnahme der Leuchtdiode 10 sinkt die Akkumulatorspannung schnell unter den Sollwert $U_A$ bzw. den maximalen Akkumulator-Spannungswert, so daß der aus dem zweiten und dritten Transistor 2, 3 gebildete Komparator wieder in den Sperrzustand kippt. Daraufhin liefert die Sperrwandlerschaltung über den Schalttransistor 1 erneut die von der Leuchtdiode 10 entnommene Energie nach, bis wiederum der Sollwert der Komparatorspannung erreicht ist. Dieser Vorgang wiederholt sich etwa im 2 Hz Rhythmus und zeigt damit an, daß die Schaltung in den Erhaltungsladezustand übergeht.

Die maximale Batteriespannung beträgt bei dieser Anordnung wie bei der Anordnung nach Fig. 1.

$$U_{Battmax} = U_6 = \frac{R23 + R25}{R25} \cdot (U_{BET^3} - U_{F_{35}}) - U_{F_{33}} + U_{CEsatT2}$$

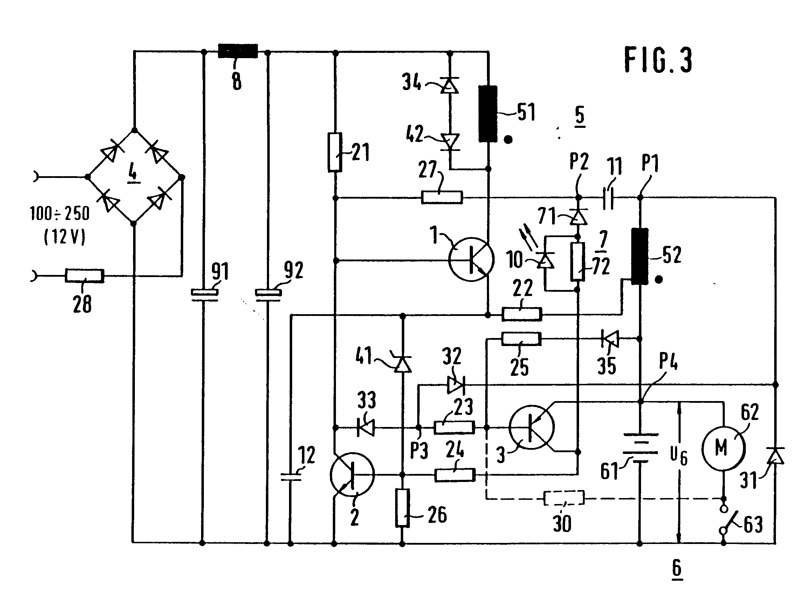

Die in Fig. 3 dargestellte Variante der erfindungsgemäßen Lösung entspricht in ihren Einzelheiten der Schaltungsanordnung gemäß Fig. 1, weist jedoch abweichend von der Anordnung gemäß Fig. 1 einen Anschluß des zweiten Widerstandes 22 an einer Anzapfung der Sekundärwicklung 52 des Übertragers 5 auf. In der Einschaltphase des ersten Transistors 1 entsteht damit an der Anzapfung der Sekundärwicklung 52 eine positive Spannung, die elektrisch in Reihe mit der Spannung des Akkumulators 61 geschaltet ist. Die an dieser Anzapfung sich proportional zur Betriebsspannung ändernde Gegenspannung bewirkt eine Änderung des Spitzenstromes des ersten Transistors 1 und damit eine Linearisierung des Sekundärstromes bzw. der Leistung über den gesamten Betriebsspannungsbereich. Dies erfolgt unabhängig von der Art des Abschaltens des ersten Transistors 1.

Bei der in Fig. 3 dargestellten Anordnung erfolgt die Abschaltung des ersten Transistors 1 dann, wenn der linear ansteigende Strom am zweiten Widerstand 22 die Spannung.

$$U = U_{z41} + U_{BET2}$$

erzeugt. Ist diese Bedingung erfüllt, so wird der zweite Transistor 2 angesteuert und entzieht dem ersten Transistor 1 den Basisstrom, worauf dieser in den Sperrzustand kippt.

Eine weitere Variante der in Fig. 3 dargestellten Anordnung ist dadurch möglich, daß die erste Zenerdiode 41 nicht an den Emitter des ersten Transistors 1, sondern an dessen Basis angeschlossen wird. Damit wird die Basis des ersten Transistors 1 auf einen bestimmten Spannungspotential festgehalten. Erreicht die Spannung am Emitter des ersten Transistors 1 infolge des linear ansteigenden Stromes den Wert der Basis abzüglich der Basis-Emitter-Schwellenspannung, dann kann kein positiver Basisstrom mehr fließen und der erste Transistor 1 kippt in den Sperrzustand.

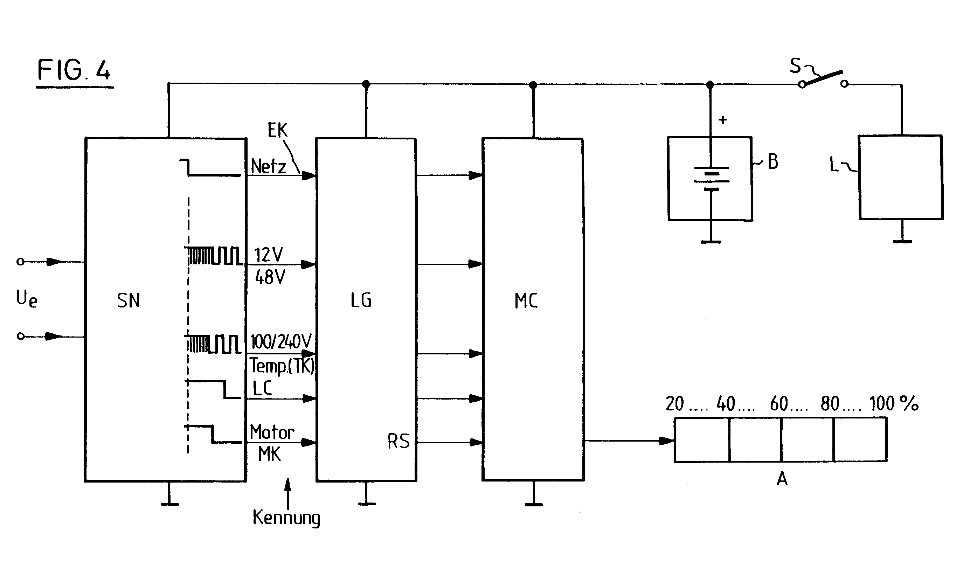

Das Blockschaltschild mit verschiedenen Kennungen nach Fig. 4 zeigt ein Schaltnetzteil SN, das beispielsweise entsprechend Fig. 1, 2 oder 3 ausgeführt sein kann, einen Logikgenerator LG, einen Microcontroller MC, eine Batterie B, die hier als 2-zelliger Akkumulator ausgeführt ist und über einen Schalter S mit der Last L, beispielsweise einen Gleichstrommotor, verbunden werden kann, und eine Anzeigeeinheit A, die beispielsweise eine aus mehreren Segmenten bestehende LCD-Anzeige sein kann.

Die aus dem Schaltnetzteil SN entnommenen und dem Logikgenerator LG zugeführten Kennungen haben folgende Bedeutung: Die Kennung EK zeigt an, ob an das Schaltnetzteil SN eine beliebig große Eingangsspanung Ue größer oder gleich 12 Volt angelegt ist oder nicht, das heißt, ob der Wandler schwingt oder nicht. Im Schaltnetzteil nach Fig. 1 kann diese Kennung EK beispielsweise am Kollektor des Transistors 3 abgenommen werden. Die Kennungen 12 Volt, 48 Volt, 100 bis 240 Volt und TK werden beispielsweise dem Punkt P1 aus Fig. 1 entnommen. Dieser Punkt P1 ist der Eingangsspannung Ue proportional. Die Kennung LC bedeutet "low charge" und zeigt an, wenn die Spannung an der Batterie B, das heißt in Fig. 1 am Punkt P4, unter einen bestimmten Schwellwert abgesunken ist, das heißt die Batterie nur noch geringfügig, beispielsweise zu 20%, geladen ist. Die Kennung MK zeigt an, ob die Last L über den Schalter S angeschaltet ist oder nicht, das ist in Fig. 1 am Punkt P4 entnehmbar.

Die beschriebenen Kennungen werden nun im Logikpegelgenerator LG so aufgearbeitet, daß sie anschließend im Microcontroller MC ausgewertet werden können. Der Microcontroller bewertet diese aufbereiteten Kennungen in Abhängigkeit von den erzeugten Zeittaktsignalen (Taktimpulsen) und steuert so die Ladezustandsanzeige A.

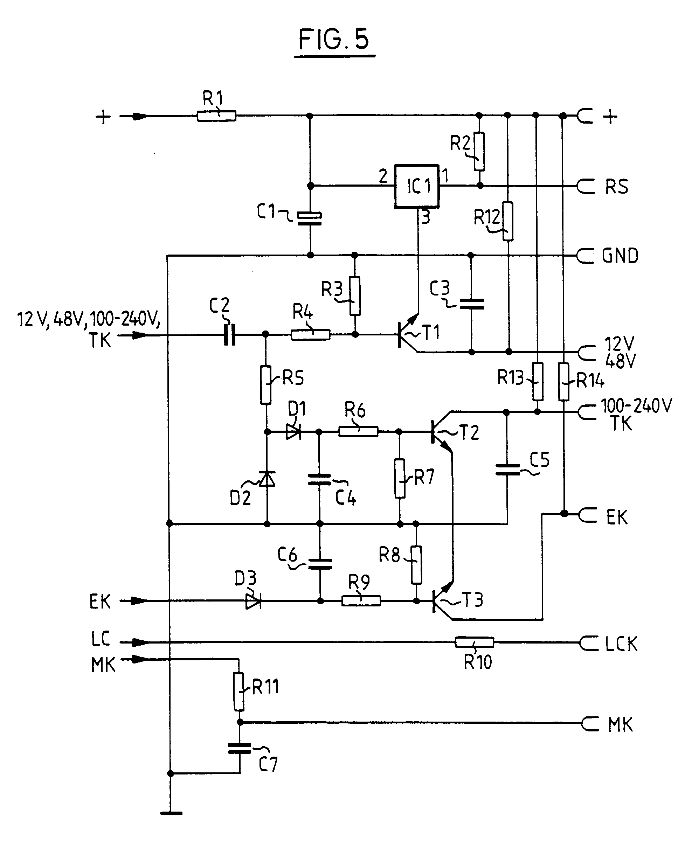

Fig. 5 zeigt das Ausführungsbeispiel eines Logikpegelgenerators LG nach Fig. 4. Über dem Widerstand R1 liegt das positive Bezugspotential des Logikpegelgenerators am positiven Pol der Batteriespannung. Der Schaltkreis IC1 stellt fest, wenn die Batteriespannung unter einen bestimmten Wert gesunken ist, beispielsweise auf unter 2 Volt bei einem zweizelligen Akkumulator, das heißt, wo dieser nur noch geringfügig geladen ist, und gibt dann ein Signal RS = RESET ab, das den Microcontroller zurücksetzt. Der Widerstand R1 und der Kondensator C1 dienen zur Siebung für den Schaltkreis IC1.

Die Kennungen 12 Volt, 48 Volt, 100 bis 240 Volt und TK werden über den Kondensator C2 und den Widerstand R4 an die Basis des Transistors T1 geführt. Diese Kennungen werden von dem der Eingangsspannung proportionalen Punkt P1 aus Fig. 1 abgenommen. Über die Widerstände R3 und R4 wird der Transistor T1 mit der Wandlerfrequenz, die ca. 30 kHz beträgt, geschaltet. Mit dem Widerstand R12 und dem Kondensator C3 wird eine Zeitkonstante erzeugt, die den Einfluß der Wandlerfrequenz unterdrückt und somit den Transistor T1 leitend hält, wodurch dieser bei Eingangsspannungen über 12 Volt konstant durchschaltet. Bei Eingangsspannungen von 12 Volt, also beispielsweise beim Anschluß an eine Autobatterie, schwingt der Wandler konstant ohne Pausen, das heißt ohne Paketbildungen. Beim Anschluß an Eingangsspannungen von 48 Volt, das heißt beispielsweise beim Anschluß an das Bordnetz eines Schiffes, würde der Akkumulator nach einiger Zeit ohne Unterbrechung der Schwingungen des Wandlers überladen. Deshalb wird über den Transistor 3 der Transistor 2 in Fig. 1 in bestimmten Zeitabständen durchgeschaltet und somit die Schwingungen des Wandlers unterbrochen. Die zeitweise Unterbrechung der Schwingungen des Wandlers im Rhythmus von ca. 2 Hz wird Paketbildung genannt. Je nachdem, ob eine solche Paketbildung vorliegt oder nicht, wird am Ausgang 12 Volt/48 Volt ein kontinuierliches Signal (12 Volt Eingangsspannung) oder ein alternierendes (48 Volt Eingangsspannung) Signal erzeugt.

Hinter dem Kondensator C2 wird über einen Widerstand R5, eine Diode D1 und einen Widerstand R6 das gleiche Eingangssignal dem Transistor T2 zugeführt. Über den Spannungsteiler R6/R7 wird das eingekoppelte Wechselspannungssignal an der Basis des Transistors T2 so heruntergeteilt, daß der Transistor T2 nur bei Eingangsspannungen größer als etwa 70 Volt leitend wird. Diese Schwellspannung von 70 Volt wurde gewählt, da es zwischen 48 Volt und 100 Volt keine genormten Betriebsspannungen gibt. Ebenso wie der Transistor T1 wird der Transistor T2 mit der Wandlerfrequenz geschaltet, aber mit Hilfe der durch den Widerstand R13 und den Kondensator C5 erzeugten Zeitkonstanten so beeinflußt, daß die Wandlerfrequenz unterdrückt wird.

Damit bleibt der Transistor T2 ab ca. 70 Volt Eingangsspannung konstant durchgeschaltet. Der Widerstand R5 dient zur Strombegrenzung der Diode D1, und die Diode D1 dient der Spitzengleichrichtung. Mit Hilfe des Kondensators C4 wird die über den Kondensator C2 eingekoppelte Spannung integriert. Die Diode D2 ist zur Entladung des Kondensators C2. Beträgt die Umgebungstemperatur weniger als etwa 30° C, liegt am Ausgang 100 bis 240 Volt des Logikpegelgenerators zu Beginn des Ladevorgangs ein konstantes Ausgangssignal an. Beträgt die Umgebungstemperatur mehr als etwa 30° C, setzt die oben bei der 12 Volt/48 Volt-Kennung beschriebene Paketbildung früher ein als bei Temperaturen unter 30° C. Dies rührt daher, daß Akkumulatoren bei höheren Umgebungstemperaturen ein geringeres Ladeannahmeverhalten aufweisen als bei niedrigeren Temperaturen. Der Schwellwert bei ca. 30° C wurde gewählt, da dieses Ladeannahmeverhalten von 25° C bis 35° C um ca. den Faktor 2 reduziert wird. Durch die früher einsetzende Paketbildung wird das Laden bei erhöhter Temperatur erkannt.

Die Kennung EK, die anzeigt, ob überhaupt eine Eingangsspannung von mindestens 12 Volt anliegt, wird über die Diode D3 und den Widerstand R9 der Basis des Transistors T3 zugeführt. Dieses Signal wird beispielsweise dem Kollektor des Transistors 3 aus Fig. 1 entnommen. Die Diode D3 dient der Entkopplung vom Kollektor des Transistors 3, der Widerstand R9 der Belastungsminderung des Kollektors von T3 in Fig. 1. Der Kondensator C6 integriert die Wandlerfrequenz, die am Kollektor des Transistors 3 anliegt. Wird nun eine Eingangsspannung über 12 Volt angelegt, das heißt, wenn der Wandler schwingt, wird über die Spitzengleichrichtung der Diode D3 und der Integration über den Kondensator C6 und die Widerstände R8 und R9 der Transistor T3 konstant durchgeschaltet und somit wie oben die Wandlerfrequenz eliminiert.

Die jeweils am Pluspotential angeschlossenen Widerstände R2, R12, R13 und R14 sind sogenannte pull-up Widerstände, das heißt, bei undefinierten Eingangssignalen werden die Ausgänge jeweils auf Pluspotential gelegt.

Die Kennung LC = "low charge" wird beispielsweise dem Punkt P4 aus der Fig. 1 über einen Schwellwertschalter entnommen. Dieser Schwellwertschalter, der eine Kippstufe sein kann, spricht dann an, wenn die Batteriespannung unter einen bestimmten Wert gesunken ist. Diese Schwellenspannung wird so definiert, daß im Akkumulator nur noch ca. 20% Ladung enthalten sind, dieser also nur noch geringfügig geladen ist. Diese Kennung LC wird über den Widerstand R10 dem entsprechenden Pegel für den nachfolgenden Microcontroller angepaßt.

Die Kennung MK dient dazu, um festzustellen, ob der Schalter S in Fig. 4, beziehungsweise der Schalter 63 in Fig. 1, geschlossen ist, ob also der Motor, das heißt die Last, angeschlossen ist oder nicht. Der Widerstand R11 und der Kondensator C7 dienen zur Unterdrückung von Spannungsspitzen beim Ein/Ausschalten der Last. Wird der Motor bei angeschaltetem Netzteil gleichzeitig betrieben, so wird diese Zeit nicht als Laden des Akkumulators gezählt.

Im folgenden werden einige Fallbeispiele, wie sie in der Praxis auftreten können, beschrieben:

Ist die verwendete Batterie, beispielsweise ein 2-zelliger Nickel -Cadmium-Akkumulator eines Rasierers, bis auf eine Restkapazität von ca. 20% entladen, erkennt dies der Microcontroller MC aufgrund der Kennung LC ("low charge"), und sämtliche Segmente der Anzeigeneinheit A sind erloschen. Wird nun der Akkumulator über das Schaltnetzteil an einem 100-240 Volt-Netz geladen, wobei aufgrund der Kapazität des Akkumulators und des Ladestromes des Schaltnetzteils der Ladevorgang bis zur Volladung bei einer Umgebungstemperatur unter 30° C ca. 1 Stunde benötigt, wird aufgrund der entsprechenden Kennungen und der im Logikpegel generator erzeugten Taktimpulse nach jeweils ca. 15 Minuten Ladezeit ein Segment der Ladezustandsanzeige A angesteuert. Nach ca. 1 Stunde wird der Ladezustand "voll" (alle Segmente leuchten auf) angezeigt. Bei einer Umgebungstemperatur über 30° C und Ladung an einem 100-240 Volt-Netz erfolgt die Anzeige "voll " erst nach ca. 2 Stunden.

Erfolgt stattdessen die Aufladung an einem 12 Volt-Netz (beispielsweise Autobatterien), erfolgt die Anzeige "voll" erst nach ca. 16 Stunden und entsprechend die Anzeige "halb voll" (Segmente 20-40% und 40-60%) nach ca. 8 Stunden. Für eine Ladung an einem 48 Volt-Netz ist der Microcontroller so eingestellt, daß die gesamte Ladezeit mit ca. 4 Stunden angenommen wird.

Natürlich wird auch berücksichtigt, wenn ein kompletter Aufladevorgang nicht nur an einer Spannungsquelle voll ständig durchgeführt wird, sondern beispielsweise zuerst an einem 100-240 Volt-Netz und danach an einem 12 Volt-Netz. Dasselbe gilt auch, wenn die Batterie nur teilweise entladen wird.

Ebenso werden entsprechende Entladungen bei der Anzeige berücksichtigt. Wird der Motor (die Last L) beispielsweise ausschließlich aus der Batterie betrieben, kann man bei der Steuerung der Anzeige davon ausgehen, daß diese nach ca. 1 Stunde bis auf die Restkapazitätsschwelle von 20% entladen ist. Die Selbstentladung des Akkumulators bei Nichtbenutzung wird mit Hilfe der erzeugten Taktimpulse ebenso berücksichtigt und die Ladezustandsanzeige entsprechend zurückgesetzt.

Das beschriebene Verfahren bzw. die beschriebene Anordnung ist nicht auf die in Fig. 1, 2 oder 3 gezeigten elektronischen Schaltnetzteile beschränkt. Es sind hierzu alle Schaltnetzteile geeignet, bei denen im Sekundärkreis Signale abgreifbar sind, die einen Aufschluß über die ungefähre Höhe der angelegten Eingangsspannung, über eine erhöhte Umgebungstemperatur und über eine Restkapazitätsschwelle geben.

Mit Hilfe der im Microcontroller erzeugten Taktimpulse und den sowieso schon vorhandenen Kennungen können weitere, für den Benutzer hifreiche Informationen angezeigt werden, wie beispielsweise der Hinweis, daß der Akkumulator nach einer bestimmten Zeit bis mindestens 20% (Restkapazitätsschwelle) entladen werden soll. Eine solche akkupflege "trainiert" die Akkuzellen und bewirkt die optimale Leistung und Lebensdauer der Zellen.

## Patentansprüche

1. Verfahren zur Bestimmung der Ladezeit und zur Anzeige des Ladezustandes eines Akkumulators (61), der mittels eines elektronischen Schaltnetzteils (SN) an Spannungsquellen unterschiedlicher Spannungshöhe geladen werden kann, mit folgenden Merkmalen:

a) es werden mittels einer Logiksignaleinheit (LG) aus dem Sekundärkreis des elektronischen Schaltnetzteils (SN) die folgenden Parameter erfaßt:

- Anliegen oder Nichtanliegen einer Eingangsspannung durch Feststellen, ob das elektronische Schaltnetzteil (SN) schwingt oder nicht,

- Höhe des anliegenden Eingangspegels durch Überprüfung eines die Schwingungen des Schaltnetzteils aufweisenden und der Eingangsspannung proportionalen Signals auf Vorhandensein von zeitweisen Unterbrechungen der Schwingungen und Überschreiten einer bestimmten Schwellspannung des Signals,

- Last (62) an den Akkumulator (61) angeschaltet oder nicht,

- Restkapazitätsschwelle überschritten oder unterschritten durch Feststellung, ob die Akkumulatorspannung über oder unter einem bestimmten Schwellwert liegt; und

b) die Logiksignaleinheit (LG) liefert diesen Parametern zugeordnete Signale (12V/48V; 100/240V; EK; LCK; MK) an eine taktimpulserzeugende Einheit (MC), wo sie so verknüpft werden, daß die Ladezeit und eine Ladezustandsanzeige (A) bei Unterschreiten der Restkapazitätsschwelle zurückgesetzt und in Abhängigkeit von der Dauer und der Höhe der anliegenden Eingangspegel sowie der Dauer der durch die angeschaltete Last (62) verursachten Entladung des Akkumulators (61) bestimmt bzw. gesteuert werden.

2. Verfahren nach Anspruch 1, dadurch gekennzeichnet, daß ein erstes Zeitintervall die Ladezeit aus einem 100 Volt-240 Volt-Netz bestimmt, wobei dieses erste Zeitintervall so groß ist, wie der Akkumulator zur vollständigen Aufladung von der Restkapazitätsschwelle bis zum vollen Zustand benötigt, daß beim Laden aus einer Eingangsspannungsquelle von ca. 50 Volt die Ladezeit etwa viermal so groß angenommen wird wie das erste Zeitintervall und daß beim Laden aus einer Eingangsspannungsquelle von ca. 12 Volt die Ladezeit etwa 16 mal so groß angenommen wird wie das erste Zeitintervall.

3. Verfahren nach Anspruch 1, dadurch gekennzeichnet, daß ein erstes Zeitintervall die Ladezeit aus einem 100 Volt-240 Volt-Netz bestimmt, wobei dieses erste Zeitintervall so groß ist, wie der Akkumulator zur vollständigen Aufladung von der Restkapazitätsschwelle bis zum vollen Zustand benötigt und daß beim Laden aus einer Eingangsspannungsquelle von unter 100 Volt die Ladezeit etwa 16 mal so groß angenommen wird wie das erste Zeitintervall.

4. Verfahren nach Anspruch 2 oder 3, dadurch gekennzeichnet, daß bei einer Umgebungstemperatur von größer als etwa 30° C durch Feststellung des geringeren Ladeannahmeverhaltens die Ladezeit aus einem 100-240 Volt-Netz verdoppelt wird.

5. Verfahren nach Anspruch 2, 3 oder 4, dadurch gekennzeichnet, daß nach Ablauf der Ladezeit das Schaltnetzteil abgeschaltet wird.

6. Verfahren nach Anspruch 2, 3 oder 4, dadurch gekennzeichnet, daß entsprechend der Ladezeit eine aus mehreren Segmenten bestehende Ladezustandsanzeige so gesteuert wird, daß sie den jeweiligen Ladezustand des Akkumulators anzeigt.

7. Schaltungsanordnung zur Durchführung des Verfahrens nach Anspruch 1, 2 oder 3 mit einer Logiksignaleinheit (LG) zur Erfassung der Parameter, einer taktimpulserzeugenden Einheit (MC) zur Bestimmung der Ladezeit und einer von der taktimpulserzeugenden Einheit (MC) gesteuerten Ladezustandsanzeigeeinheit (A), wobei das Signal (Kennungen 12 Volt, 48 Volt und 100 - 240 Volt), das die Höhe des Eingangspegels anzeigt, der Basis eines ersten Transistors und über einen Spannungsteiler (R6, R7) der Basis eines zweiten Transistors (T2) zugeführt wird, das Signal (Kennung EK), ob überhaupt eine Eingangsspannung anliegt, der Basis eines dritten Transistors (T3) zugeführt wird und mit Hilfe von Zeitgliedern der Einfluß der Schwingungen des elektronischen Schaltnetzteils (SN) unterdrückt wird, wobei weiter die Akkumulatorspannung (Kennung LC) über einen Schwellwertschalter und ein Signal (MK), das anzeigt, ob die Last (62) angeschaltet ist, der Logiksignaleinheit (LG) zugeführt werden, so daß am Ausgangskreis des ersten Transistors (T1) die Signale für Eingangspegel unter 1oo Volt (Kennungen 12 Volt und 48 Volt), am Ausgang des zweiten Transistors (T2) die Signale für Eingangspegel über 100 Volt (Kennung 100 - 240 Volt) und am Ausgangskreis des dritten Transistors (T3) das Signal, daß eine Eingangsspannung anliegt (Kennung EK), sowie an weiteren Ausgängen das Signal für eine Restkapazität über oder unter einer bestimmten Schwelle (LCK) und Last (62) angeschaltet (MK) abgreifbar sind und der taktimpulserzeugenden Einheit (MC) zugeführt werden.

8. Schaltungsanordnung nach Anspruch 7, dadurch gekennzeichnet, daß das Signal, daß eine Umgebungstemperatur von größer als ca. 30° C vorliegt (Kennung TK), ebenfalls am Ausgangskreis des zweiten Transistors (T2) abgreifbar ist.

9. Schaltungsanordnung nach Anspruch 7 oder 8, dadurch gekennzeichnet, daß in der Logiksignaleinheit (LG) ein Schaltkreis (IC 1) vorgesehen ist, der den Microcontroller (MC) zurücksetzt (RS), wenn die Batteriespannung unter einen bestimmten Wert gesunken ist.

**Claims**

1. A process for determining the charging time and for indicating the charge status of an accumulator (61) which is adapted to be charged from voltage sources of different magnitudes by means of an electronic switching power supply (SN), incorporating the following features:

   (a) The following parameters are obtained from the secondary circuit of the electronic switching power supply (SN) by means of a logic signal unit (LG):
   - Presence or absence of an input voltage by determining whether or not the electronic switching power supply (SN) oscillates;
   - Magnitude of the input level applied by checking a signal indicative of the oscillations of the switching power supply and proportional to the input voltage for the presence of intermittent interruptions of the oscillations and the exceeding of a predetermined threshold voltage of the signal;
   - Load (62) connected to or disconnected from the accumulator (61);
   - Residual capacity threshold exceeded or not exceeded by determining whether the accumulator voltage is above or below a predetermined threshold value; and

   (b) The logic signal unit (LG) delivers signals associated to these parameters (12V/48V; 100/240V; EK; LCK; MK) to a clock-pulse generating unit (MC) in which they are combined in such a manner that the charging time and a charge-status indicator means (A) are reset when the residual capacity has dropped below the predetermined threshold, and are determined or controlled in dependence upon the duration and the magnitude of the input levels applied as well as in dependence upon the duration of the discharge of the accumulator (61) caused by the connected load (62).

2. The process as claimed in claim 1, characterized in that a first time period determines the charging time from a 100-to-240 volt supply, with said first time period being as long as the time required by the accumulator for a full charge starting from the residual capacity threshold up to its fully charged condition, that charging from an input voltage source of about 50 volts is assumed to require a period of time about four times said first time period, and that charging from an input voltage source of about 12 volts is assumed to require a period of time about sixteen times said first time period.

3. The process as claimed in claim 1, characterized in that a first time period determines the charging time from a 100-to-240 volt supply, with said first time period being as long as the time required by the accummulator for a full charge starting from the residual capacity threshold up to its fully charged condition, and that charging from an input voltage source of less than 100 volts is assumed to require a period of time about sixteen times said first time period.

4. The process as claimed in claim 2 or claim 3, characterized in that at an ambient temperature of more than 30°C, approximately, the charging time from a 100-to-240 volt supply is doubled due to a reduced charge-acceptance behavior being established.

5. The process as claimed in claim 2, 3 or 4, characterized in that the switching power supply is turned off after the charging time has elapsed.

6. The process as claimed in claim 2, 3 or 4, characterized in that in accordance with the charging time a charge-status indicator means comprising several segments is controlled such as to indicate the respective charging condition of the accumulator.

7. A circuit arrangement for implementing the process as claimed in claim 1, 2 or 3, with a logic signal unit (LG) for sensing the parameters, a clock-pulse generating unit (Mc) for determining the charging time, and a charge-status indicator means (A) controlled by the clock-pulse generating unit (Mc), wherein the signal (parameters 12 volts, 48 volts and 100-240 volts) indicative of the magnitude of the input level is supplied to the base of a first transistor and, through a voltage divider (R6, R7), to the base of a second transistor (T2), wherein the signal indicating the presence of an input voltage (parameter EK) is supplied to the base of a third transistor (T3) and the effect of the oscillations of the electronic switching power supply (SN) is suppressed by means of timing elements, wherein further the logic signal unit (LG) receives the accumulator voltage (parameter LC) through a threshold switch and a signal (MK) indicating whether the load (62) is connected, so that the signals indicative of input levels lower than 100 volts (parameters 12 volts and 48 volts) are obtainable at the output circuit of the first transistor (T1), the signals indicative of input levels higher than 100 volts (parameter 100-240 volts) are obtainable at the output of the second transistor (T2), the signal indicating the presence of an input voltage (parameter EK) is obtainable at the output circuit of the third transistor (T3), and the signal indicative of a residual capacity above or below a predetermined threshold (LCK) and the signal (MK) indicative of a connected load (62) are obtainable at further outputs, the signals being delivered to the clock-pulse generating unit (MC).

8. The circuit arrangement as claimed in claim 7, characterized in that the signal indicating the presence of an ambient temperature higher than 30°C, approximately (parameter TK), is equally obtainable at the output circuit of the second transistor (T2).

9. The circuit arrangement as claimed in claim 7 or claim 8, characterized in that the logic signal unit (LG) includes a circuit (IC 1) resetting (RS) the micro-controller (MC) when the battery voltage has dropped below a predetermined value.

**Revendications**

1. Procédé de détermination du temps de charge et d'affichage de l'état de charge d'un accumulateur (61) qui peut être chargé par des sources de tension de niveaux de tension différents au moyen d'une partie de circuit combinatoire électronique (SN), comportant les particularités suivantes :
a) les paramètres suivants sont saisis au moyen d'une unité de signal logique (LG) à partir du circuit secondaire de la partie de circuit combinatoire électronique (SN) :
- application ou non application d'une tension d'entrée par détermination de ce que la partie de circuit combinatoire électronique (sN) oscille ou non,
- hauteur du niveau d'entrée appliqué, par examen d'un signal présentant les oscillations de la partie de circuit combinatoire et proportionnel à la tension d'entrée, par la présence d'interruptions temporaires des oscillations et par dépassement vers le haut d'une tension de seuil déterminée du signal,
- charge (62) branchée ou non à l'accumulateur (61),
- seuil de capacité restante dépassé vers le haut ou dépassé vers le bas, par détermination de ce que la tension d'accumulateur est au-dessus ou en dessous d'une valeur de seuil déterminée, et
b) l'unité de signal logique (LG) fournit des signaux adjoints à ces paramètres (12 V/48 V; 100/240 V; EK; LCK; MK) à une unité de production d'impulsions de commande (MC) où ils sont combinés de façon que le temps de charge et un affichage d'état de charge (A) soient remis à l'état initial lors d'un dépassement vers le bas du seuil de capacité restante et soient déterminés ou commandés en fonction de la durée et de la hauteur du niveau d'entrée appliqué ainsi que de la durée de la décharge de l'accumulateur (61) provoquée par la charge (62) branchée.

2. Procédé suivant la revendication 1, caractérisé en ce qu'un premier intervalle de temps détermine le temps de charge à partir d'un réseau de 100 volts à 240 volts, ce premier intervalle de temps étant de la grandeur dont l'accumulateur a besoin pour la charge complète depuis le seuil de capacité restante jusqu'à l'état complet, en ce que lors de la charge à partir d'une source de tension d'entrée d'approximativement 50 volts le temps de charge est pris approximativement quatre fois plus grand que le premier intervalle de temps et en ce que lors de la charge à partir d'une source de tension d'entrée d'approximativement 12 volts le temps de charge est pris approximativement seize fois plus grand que le premier intervalle de temps.

3. Procédé suivant la revendication 1, caractérisé en ce qu'un premier intervalle de temps détermine le temps de charge à partir d'un réseau de 100 volts à 240 volts, ce premier intervalle de temps étant de la grandeur dont l'accumulateur a besoin pour la charge complète depuis le seuil de capacité restante jusqu'à l'état complet, et en ce que lors de la charge à partir d'une source de tension d'entrée d'en dessous de 100 volts le temps de charge est pris approximativement seize fois plus grand que le premier intervalle de temps.

4. Procédé suivant la revendication 2 ou 3, caractérisé en ce que lors d'une température d'ambiance supérieure à approximativement 30°C, le temps de charge à partir d'un réseau de 100 à 240 volts est doublé par détermination du rapport plus faible de prise de charge.

5. Procédé suivant la revendication 2, 3 ou 4, caractérisé en ce qu'après écoulement du temps de charge on débranche la partie de circuit combinatoire.

6. Procédé suivant la revendication 2, 3 ou 4, caractérisé en ce que conformément au temps de charge un affichage d'état de charge, constitué par plusieurs segments, est commandé de façon qu'il affiche l'état de charge respectif de l'accumulateur.

7. Agencement de circuit pour la mise en oeuvre du procédé suivant la revendication 1, 2 ou 3, comportant une unité de signal logique (LG) pour saisir les paramètres, une unité de production d'impulsions de commande (MC) pour la détermination du temps de charge et une unité d'affichage d'état de charge (A) commandée par l'unité de production d'impulsion de commande (MC), dans lequel le signal (caractéristiques de 12 volts, 48 volts et 100 à 240 volts) qui indique la hauteur du niveau d'entrée est fourni à la base d'un premier transistor et par un diviseur de tension (R6, R7) à la base d'un deuxième transistor (T2), dans lequel, si surtout une tension d'entrée est appliquée, le signal (caractéristique EK) est fourni à la base d'un troisième transistor (T3) et l'influence des oscillations de la partie de circuit combinatoire électronique (SN) est supprimé à l'aide d'éléments temporisés, dans lequel en outre la tension d'accumulateur (caractéristiques LC), via un commutateur à valeur de seuil, et un signal (MK) qui indique si la charge (62) est branchée sont fournis à l'unité de signal logique (LG) de sorte que puissent être prélevés, et que soient fournis à l'unité de production d'impulsion de commande (MC), pour le circuit de sortie du premier transistor (T1) les signaux de niveaux d'entrée en dessous de 100 volts (caractéristiques de 12 volts et de 48 volts), pour la sortie du deuxième transistor (T2) les signaux de niveaux d'entrée au-dessus de 100 volts (caractéristique de 100 à 240 volts) et pour le circuit de sortie du troisième transistor (T3) le signal qu'une tension d'entrée est appliquée (caractéristique EK), ainsi que pour les autres sorties le signal d'une capacité restante au-dessus ou en dessous d'un seuil déterminé (LCK) et celui de charge (62) branchée (MK).

8. Agencement de circuit suivant la revendication 7, caractérisé en ce que le signal qu'une température d'ambiance supérieure à approximativement 30°C est présente (caractéristique TK) peut aussi être prélevé au circuit de sortie du deuxième transistor (T2).

9. Agencement de circuit suivant la revendication 7 ou 8, caractérisé en ce qu'est prévu dans l'unité de signal logique (LG) un circuit de commutation (IC 1) qui remet à l'état initial (RS) le microrégulateur (MC) lorsque la tension de batterie est descendue sous une valeur déterminée.

FIG.1

FIG.2

11

FIG.3

EP 0 400 041 B1

FIG. 4

## FIG. 5